# EUROPEAN PATENT SPECIFICATION

(11) **EP 1 593 103 B1**
(45) Date of publication and mention of the grant of the patent: **31.08.2011**
(21) Application number: 04706520.6
(22) Date of filing: 29.01.2004
(51) Int. Cl.: G08B 21/12

(54) **APPARATUS AND METHOD FOR DETECTING RADIATION OR RADIATION SHIELDING IN SHIPPING CONTAINERS**
VORRICHTUNG UND VERFAHREN ZUR ERKENNUNG VON STRAHLUNG ODER STRAHLUNGSABSCHIRMUNG IN VERSANDBEHÄLTERN
APPAREIL ET PROCEDE POUR LA DETECTION DE RAYONNEMENT OU DE BLINDAGE DE RAYONNEMENT DANS DES CONTENEURS D'EXPEDITION

(30) Priority: 31.01.2003 US 356154; 19.06.2003 US 600307
(43) Date of publication of application: 09.11.2005
(73) Proprietor: Veritainer Corporation, St. Helena, CA 94574 (US)
(72) Inventor: ALIOTO, John I., St. Helena, CA 94574 (US); GREER, Kenneth L., St. Helena, CA 94574 (US); ALIOTO, Matthew T., St. Helena, CA 94574 (US)
(74) Representative: Johnstone, Helen Margaret
(86) International application number: PCT/US2004/002589
(87) International publication number: WO 2004/090829

(56) References cited:
- WO-A-03/091697
- US-A- 5 838 759
- US-A- 5 948 137
- US-A- 6 115 128
- US-B1- 6 347 132

## Description

### BACKGROUND OF THE INVENTION

### 1. Field of the Invention

The present invention is directed to a method for the detection of fissile or radioactive material. More particularly, it is directed to a method to detect the presence of radioactive materials in a shipping container where the contents of the container are listed on a manifest, packing slip or other list of contents.

### 2. Background of the Art

On September 11, 2001, the United States was attacked by a terrorist network named al Qaeda. The al Qaeda terrorists hijacked four commercial airliners to launch a massive attack. The terrorists flew a hijacked airliner into each of the two towers of the World Trade Center in New York City and one into the Pentagon in Washington, D.C., the military headquarters of our country. The efforts of courageous airline passengers and crew foiled the attempt to fly the fourth hijacked airliner into an additional target, most likely in the Washington, D.C. area, by causing it to crash into the Pennsylvania countryside. In all, over 3,000 people were killed on American soil on the morning of September 11, 2001.

The September 11 attacks were a wake-up call for America. Americans suddenly realized that our free and open society was vulnerable to terrorist attack in many ways. Everywhere, Americans saw vulnerabilities, especially to "weapons of mass destruction" such as nuclear weapons. One type of nuclear weapon is a device, such as a bomb or warhead, whose great explosive power derives from the release of nuclear energy.

Another type of nuclear weapon includes the so-called "dirty bomb." A dirty bomb is a conventional explosive device packed with radioactive material to spread radioactive contamination that causes sickness in human beings. Radiation sickness is illness induced by exposure to ionizing radiation, ranging in severity from nausea, vomiting, headache, and diarrhea to loss of hair and teeth, reduction in red and white blood cell counts, extensive hemorrhaging, sterility and death.

Vulnerability of harm to the populace caused by terrorists from nuclear weapons requires that such weapons be delivered to and detonated in the target area. However, a terrorist relies on stealth in which to deliver a weapon and not conventional military means of delivery. For example, a terrorist may be able to stealthily deliver a nuclear weapon onto American soil by secreting it in one of the tens of thousands of shipping containers that are brought into the United States every day.

One of the purposes of this invention, when used together with radiation detection and radiation shielding detection devices, is to prevent the transportation of nuclear weapons by stealth in shipping containers into and out of ports anywhere in the world, in general, and into and out of ports in the United States, in particular. A further purpose of this invention, when used together with radiation detection and radiation shielding detection devices, is to prevent nuclear weapons from being imported into the United States by stealth in shipping containers that are (1) loaded in foreign ports; (2) transported to the United States by ships, including huge ocean-going containerships that carry upwards of 4,000 twenty- foot-equivalent ("TEUs") shipping containers; and, (3) unloaded in, or brought into close proximity to, ports or population centers in the United States. Using this invention together with radiation detection and radiation shielding detection devices, the threat from terrorists attacking the United States or any other nation with nuclear weapons brought into proximity to population centers by stealth in a shipping container can be mitigated.

### a. Detection Systems

It is known in the art of nuclear weapon detection technology that uranium based nuclear weapons emit detectable gamma rays. Given the periodic table symbol "U," uranium is a heavy silvery-white metallic element, radioactive and toxic, easily oxidized, and having 14 known isotopes of which U 238 is the most abundant in nature. The element occurs in several minerals, including uraninite and carnotite, from which it is extracted and processed for use. It has an atomic number 92; atomic weight 238.03; melting point 1,132°C; boiling point 3,818°C; specific gravity 15.95; valence 2, 3, 4, 5, 6. Uranium is enriched in a process whereby the amount of one or more radioactive isotopes in the material is increased.

It is also known in the art of nuclear weapon detection technology that plutonium based nuclear weapons emit detectable gamma rays. Given the periodic table symbol "Pu," plutonium is a naturally radioactive, silvery, metallic transuranic element, occurring in uranium ores and produced artificially by neutron bombardment of uranium. Its longest-lived isotope is Pu 244 with a half-life of 76 million years. It is a radiological poison, specifically absorbed by bone marrow, and is used, especially the highly fissionable isotope Pu 239, as a reactor fuel and in nuclear weapons. It has an atomic number 94; melting point 640°C; boiling point 3,235°C; specific gravity 19.84; valence 3, 4, 5, 6.

Since the 1911 work of Hans Geiger, it has been know that devices can detect the presence of ionizing radiation. Named the Geiger- Müller counter, an improved version of the device detects alpha particles, electrons and ionizing electromagnetic photons. Modernly, plastic scintillation is used to detect gamma radiation. For example, Canberra Industries, Inc. of Meriden, CT (www.canberra.com) manufactures and markets monitors that use scintillation detectors designed for the radiological control of pedestrian vehicles, trucks and rail cars. For another example, Amptek, Inc. of Bedford, MA (www.amptek.com) manufactures and markets a "Gamma-8000" scintillation detector that utilizes sodium iodide crystal detection and digitalization to detect and spectrographically analyze gamma radiation. There are other devices commercially available that can be used to detect radiation, including those that use both scintillating and non-scintillating materials (solid state detectors such as mercuric iodide or cadmium telluride). In this description and the appended claims, all of these devices are generically referred to as "fissile or radioactive material detection device(s)."

It is known in the art of nuclear weapon detection technology that the presence of uranium or plutonium based nuclear weapons can be concealed by covering the weapon with radiation shielding material such as lead. Given the periodic table symbol "Pb," lead is a soft, malleable, ductile, bluish-white, dense metallic element, extracted chiefly from galena and used in containers and pipes for corrosives, solder and type metal, bullets, radiation shielding, paints, and antiknock compounds. It has an atomic number 82; atomic weight 207.2; melting point 327.5°C; boiling point 1,744°C; specific gravity 11.35; valence 2, 4. A nuclear weapon could be placed in a shipping container and then covered with a layer of radiation shielding material, typically lead of one to two inches or more in thickness. In this way, the fissile or radioactive material detection device or devices may not be capable of identifying the presence of the nuclear weapon. Thus, radiation shielding material can be used to deliver and detonate a nuclear weapon on American soil by bringing the weapon into the country by stealth in a shipping container.

Other shielding materials are also known in the art. For example, high density concrete is typically used to contain radioactive emission in structures. The thickness of high density concrete to shield a nuclear weapon placed in a shipping container could be in the same order of magnitude as the thickness of lead required in the above example. All of these shielding materials will attenuate or entirely block gamma radiation such that the presence of fissile or radioactive material cannot be detected.

There are two major limitations on the use by terrorist of radiation shielding material to shield the radiation emanating from a nuclear device hidden in a shipping container: (1) an x-ray or other similar detection system can detect the presence of an amount of radiation shielding material necessary to shield the radiation emanating from the nuclear device; and, (2) the maximum amount of weight of the shipping container permitted by various state and federal regulations in the United States in order that the container be truly intermodal (the so-called "over-the-road" weight limitation). In either event, as more fully discussed below, the presence of the concealed weapon has been indirectly made known through the presence of the shielding material, thereby thwarting the terrorist attack.

First, x-ray or other similar detection inspection systems of shipping containers to attempt to discern the presence of radiation shielding material are well known in the art. For example, some of these inspection systems typically produce a transmission image by the measurement of the intensity distribution of the x-rays that transverse the shipping container. X-ray or other such detection systems rely on a source that emits x-rays, gamma rays or other radiation. These are sometimes referred to as "active" systems in the sense that they generate radiation to be passed through an object to be scanned, and then measure the intensity, location or other attribute of the radiation exiting such object. Thus, radiation shielding material used to cover a nuclear weapon can be detected by the use of such x-ray or other active detection systems, since such material, would be absorptive of the radiation.

An example of an x-ray inspection system for automatically detecting nuclear weapons materials is provided in US 6,347,132. This inspection system comprises a high energy x-ray fan beam or a travelling pencil beam that traverses an object under inspection. The x-ray energy that passes through the object is detected by a detector, and the detected signal is processed to detect the presence of areas of very high x-ray attenuation within the object under inspection. These areas of high x-ray attenuation are indicative of nuclear weapons materials.

However, the use of active detection systems to detect radiation shielding suffers from serious drawbacks. Active detection systems (1) produce harmful radiation and thus are not suitable for the work environment; (2) can damage certain types of cargo carried in containers such as photographic film; (3) require a separation space between the radiation source and the detector into which space the inspected container must be placed; and, (4) are difficult to accommodate on the hoist attachment of the container crane.

### b. Shipping Container Systems Or Containerization

Since the late 1960's, the use of shipping containers for ocean-going transportation or containerization has been prevalent. The shipping container has significant advantages over the old, so-called "break bulk" system of lashing and shoring of cargo in the cargo holds of "tween deck" vessels or any other type of break bulk system, e.g., LASH barges. Containerization makes intermodal transportation a reality. Once cargo is loaded into a container at its origin (usually by its manufacturer or seller), containerization makes possible the transportation of the container by truck, rail and ship, over land and sea, to its destination without disturbing its contents. Containerization creates greater speed of transportation while, at the same time, less expensive handling, damage and theft.

As with all ocean going freight systems, in containerization, the port or ports of loading and unloading (embarkation and disembarkation) constitute major bottlenecks. At the load port, the full container is taken into the container yard. There, the container's identification (the "Container ID") is recorded for many purposes, including tracking and location purposes. The Container ID can be alphanumeric, numeric, a bar code or other identification designation. At or before this time, the contents in the container are recorded for inclusion on a list or manifest. The manifest lists each container and the contents of each container with specificity (the "ship's manifest"). Transportation companies often create databases that contain the manifest information associated with each container (a "manifest database,"). Among other things, the manifest database contains a commodity identification designed to represent the contents in each container (the "Commodity ID"). Commodity IDs have been standardized by the U.S. International Trade Commission (the "standardized Commodity ID"). (See, Harmonized Tariff Schedule at http://dataweb.usite.gov//SCRIPTS/tariff/toc.html).

At the load port, the full container is stored, usually in an open yard, to await loading aboard the containership. During this period of storage, the full container can be inspected. However, inspection in the container yard requires that an additional step or function take place, namely, additional handling by additional personnel.

Similarly, at the load port, the partially loaded container is taken into the container yard. There, the Container ID is recorded for many purposes, including tracking and location purposes. Prior to storage in the container yard, the cargo in the partially loaded container may be consolidated with other cargo either in the same container or in another container. At or before this time, the container and its contents are listed on the manifest and in the manifest database. Thereafter, the container is stored in the container yard to await loading aboard the containership. During this period of storage, the container can be inspected. However, once again, inspection in the container yard requires that an additional step or function take place, namely, additional handling by additional personnel.

Tens of thousands of containers are loaded and unloaded in the ports of the world every day. However, only a very small percentage of these containers is inspected. For example, anecdotal evidence suggests that of the some 21,000 containers unloaded in the ports of the United States every day, less than 3% are inspected. This situation represents a major vulnerability to terrorism and other unlawful conduct due to the possibility of concealment of nuclear weapons. Accordingly, a need exists in the art to mitigate the possibility of an attack on the United States, or any other nation or population, with nuclear weapons brought into proximity to population centers by stealth in a shipping container. US 5,838,759 Discloses a system for detecting for detecting the presence of fissile or radioactive material in a shipping container wherein a detection device assembly replaces a crane hoist or spreader in a container crane assembly.

### SUMMARY OF THE INVENTION

The invention is defined in the independent claims. Preferred embodiment are claimed in the dependent claims.

According to the present invention, a fissile or radioactive material detection device is placed on the container crane that is used to load and unload a container ship. These container cranes are usually located on the shoreside or top wharfage of the container yard where containers are loaded and unloaded. Sometimes, there are container cranes located aboard the containership itself. All of these container cranes utilize a device known as a spreader, yoke or grabber, but more particularly described as a hoist attachment. In this description and the appended claims, the words "spreader," "yoke," "grabbed" and "hoist attachment" are synonymous and refer to that part of the container crane used to load and unload containerships that is physically attached to the hoist mechanism and, during loading and unloading operations, also physically attached to the container. The hoist attachment is attached to the container by virtue of male pieces, sometimes called "twist locks," on the hoist attachment and female pieces at the corners of the container, sometimes called "corner castings."

A shoreside container crane sits on the top wharfage in an "A" frame or rectangular box frame structure. The crane has four stanchions or vertical supports that are usually on rails. The crane travels fore and aft on the top wharfage alongside the ship in order to load or unload containers from any hold or longitudinal section of the ship. The crane also has a horizontal boom-like girder held in place by suspension cables. Typically, girders extend and retract on a hinge or they may telescope (slide inward and outward in overlapping sections). In a loading operation, traveling to and fro along the girder by virtue of a carriage or trolley, the hoist mechanism and hoist attachment extend out from the top wharfage over the ship.

The hoist attachment is a rectangularly shaped structure consisting of steel beams with male pieces or "twist lock" at the four corners. The male pieces lock into the corner casting female pieces located at the corners of a container. The hoist attachment is the interface between the hoist mechanism of the container crane and the container. During loading or unloading, the hoist attachment is physically attached to the hoist mechanism and the container. It is the only part of the container crane that touches the container. The hoist attachment can retract or expand to accommodate twenty-foot, forty-foot or forty-five-foot containers. In this description and the appended claims, the words "spreader," "yoke," "grabber" and "hoist attachment" are synonymous.

For example, during loading, the hoist attachment is attached to a container. The hoist mechanism then lifts the hoist attachment and attached container upwardly from the top wharfage or from vehicles on the top wharfage or from an interim stage located on the container crane itself. Once at the desired height above the side of the ship to be loaded, the hoist mechanism and hoist attachment with attached container travel outwardly athwartships (across the ship from side to side) and stop above the appropriate container cell on the ship. The hoist mechanism then lowers the hoist attachment with attached container into the hold or onto the deck of the ship to the designated location for the particular container. Once the container is in place, the hoist attachment separates from the container and is lifted upwardly by the hoist mechanism whence it is returned to a location above the top wharfage to load another container. During unloading, the reverse occurs: the hoist mechanism lifts the hoist attachment and attached container out of the hold or off the deck of the ship and places the container on the top wharfage, a vehicle on the top wharfage or an interim stage located on the container crane itself.

For so-called "self contained ships" or ships equipped with their own container crane or cranes, the structures and operations are similar. The shipboard crane sits on the ship's deck as a rectangular box frame structure. The crane has four stanchions or vertical supports that are connected by beams, straddle the ship's holds and are usually on rails. The crane travels fore and aft on the ship's deck in order to load or unload containers from any hold or deck section of the ship. The crane also has a horizontal boom-like girder. The girder telescopes (slides inward or outward in overlapping sections) and extends and retracts. In a loading operation, traveling to and fro along the girder, the hoist mechanism and hoist attachment extend out from the ship over the top wharfage. The hoist mechanism lowers the hoist attachment that then attaches to the container. Once attached, the hoist mechanism lifts the hoist attachment and attached container upwardly to an appropriate height over the side of the ship, travels inwardly athwartships (across the ship from side to side) and stops above the appropriate container cell or deck location on the ship. The hoist mechanism then lowers the hoist attachment and attached container into the hold or on to the deck of the ship to the designated location for the particular container.

The structures and functions described above for shoreside and shipboard cranes exist and occur identically when the water vehicle is a barge rather than a ship. In this description and the appended claims, the words "container crane" mean a container crane whether operated on shore or aboard a waterborne vehicle (a ship or a barge).

There are some shoreside container cranes that load the container in more than one stage. In a two stage container crane, there are additional, rearward (the part of the crane that is the farthest from the ship) stanchions. These stanchions create an additional hoisting area at the rear of the crane (the part of the crane that is farthest from the ship). In the additional hoisting area, an additional hoist mechanism and hoist attachment are employed. The additional hoist mechanism and hoist attachment lift the container to a platform located on the container crane itself. Thereafter, the hoist mechanism and hoist attachment at the front of the crane (the part of the crane that is closest to the ship) take the container from this platform and load it aboard the ship in the manner previously described. There are also container cranes that handle more than one container at a time. In this description and the appended claims, the words "container crane" mean a container crane whether it has an additional hoisting area, hoist mechanism or hoist attachment or handles more than one container at a time.

It is the invention of the systems and methods described herein to make and use container cranes of which fissile or radioactive material detection devices are a part. The fissile or radioactive material and radiation shielding detection devices located on the container crane (preferably on the hoist attachment) will inspect the container during the time that the hoist attachment of the container crane is attached to the container and while loading or unloading the ship. The fissile or radioactive material detection devices and radiation shielding detection devices is equipped with a microprocessor which will receive, process (e.g., compare) and communicate a record of the levels of radiation or extent of radiation shielding material present in the container.

With this system and method, a shipping or stevedoring company can check the level of radiation or radiation shielding material present in virtually every container that the company loads onto or unloads from virtually every ship or barge it operates or stevedores. After the microprocessor records the levels of radiation or extent of radiation shielding material present in the container, this information can be communicated (on a wire or wirelessly) to the operator of the crane, the operations office in the container yard and, through a computer at the dockside, to the headquarter office of the company or any governmental agency or authority. Among other things, the shipping or stevedoring company can use the information about the levels of radiation to decide whether the particular container should continue to be loaded or unloaded or, rather, should be subject to further detection techniques, including physical inspection.

In another embodiment, not forming part of the present invention, radiation or fissile material or radiation. shielding material may be detected in shipping containers by reading digitized gamma ray data passively derived from gamma ray emissions from the container, analyzing the data to determine if the digitized gamma ray data is (a) commensurate with a predetermined gamma ray fingerprint or (b) anomalous to an expected gamma ray fingerprint, and signaling that the container contains radiation or fissile material or radiation shielding material in the event the data is commensurate with the predetermined fingerprint or anomalous to the expected fingerprint.

In other embodiments, not forming part of the present invention, gamma ray data is gathered and digitized into (1) the intensity of the source of the gamma rays; and/or, (2) the energy of each gamma ray. This gathered and digitized gamma ray data will hereinafter be referred to as a "fingerprint." A fingerprint can be represented as a spectrogram or spectrograph. Weapon fingerprints are fingerprints taken from test containers with fissile or radioactive materials in them (the "weapon fingerprints"). Manifest fingerprints are fingerprints taken from test containers with legitimate contents in them such as those contents listed on the manifest (the "manifest fingerprints"). Background fingerprints are fingerprints taken from empty test containers. Two types of background fingerprints are used in the present invention: (1) the original background fingerprint; and, (2) the inspection day background fingerprint. The original background fingerprint is the fingerprint taken at the time the weapon and manifest databases are created. The inspection day background fingerprint is the fingerprint created on the day that a container is inspected according the present invention as more fully set forth below.

A feature in one particular embodiment not forming part of the present invention is that databases of fingerprints are constructed. The databases constructed are: (1) the weapon fingerprint database; (2) the manifest fingerprint database; and, (3) the inspection day background fingerprint database. In addition, the embodiment contemplates access to a manifest database maintained by the company that transports the container and its contents. At a minimum, the manifest database must list each container by Container ID and the contents thereof by standardized Commodity ID.

Using the computer program, databases and methods described, the fingerprint of a given container (the "suspect container") and its associated Container ID are used to analyze the contents by up to four tests: (1) the weapon test; (2) the manifest test; (3) the background radiation test; and, (4) the equivalence radiation test.

### 1. The Weapon Test:

The weapon fingerprint database is consulted for a heuristic match by comparing the fingerprint of the suspect container with the weapon fingerprints in the weapon fingerprint database. If fingerprint of the suspect container heuristically matches a fingerprint in the weapon fingerprint database, then the suspect container likely contains an unshielded nuclear weapon and a status to that effect is returned. If the fingerprint of the suspect container does not heuristically match any fingerprint in the weapon fingerprint database, then the manifest test is performed.

### 2. The Manifest Test:

The manifest database lists containers by Container ID. It also lists the contents of each such container, each such content being represented by the standardized Commodity ID. The manifest fingerprint database contains fingerprints of legitimate container contents, each such content being identified by the same standardized Commodity ID used by the manifest database. Using the Container ID, the manifest database is queried to determine the standardized Commodity ID of the contents said to be in the suspect container. Using the resulting standardized Commodity ID, the manifest fingerprint database is queried to determine the fingerprint of the contents said to be in the suspect container (the "purported fingerprint").

The manifest fingerprint database is consulted to compare the fingerprint of the suspect container with the purported fingerprint in the manifest fingerprint database. If the fingerprint of the suspect container heuristically matches the purported fingerprint, then the suspect container likely has the contents said to be in it by the manifest and a status to that effect is returned. If the fingerprint of the suspect container does not heuristically match the purported fingerprint, then the background radiation test is performed.

### 3. The Background Radiation Test:

The inspection day background fingerprint database is consulted to compare the fingerprint of the suspect container with the inspection day background fingerprint in the inspection day background fingerprint database. If the fingerprint of the suspect container is substantially lower than the inspection day background fingerprint, then the suspect container likely contains radiation shielding material that could possibly shield a nuclear weapon and a status to that effect is returned. If the fingerprint of the suspect container is not substantially lower than the inspection day background fingerprint, then the equivalence radiation test is performed.

### 4. The Equivalence Radiation Test:

If the fingerprint of the suspect container does not heuristically match the purported fingerprint and is not substantially lower than the inspection day background fingerprint; then, the equivalence radiation test is performed. Using the fingerprint of the suspect container, the entire manifest fingerprint database is consulted. If the fingerprint of the suspect container heuristically matches any fingerprint in the manifest fingerprint database, then the suspect container likely contains legitimate contents that are different than those listed on the manifest and a status to that effect is returned. If the fingerprint of the suspect container does not heuristically match any fingerprint in the manifest fingerprint database, then the contents of the suspect container are unknown and a status to that effect is returned.

The following procedures can be used to create these fingerprint databases:
(1) Original Background Fingerprint: An original background fingerprint is created. The original background fingerprint is created by using radioactive or fissile material detection devices to gather data from the contents of a test container with nothing in it. In the preferred embodiment, this data from the contents of a test container with nothing in it is then digitized into both the intensity of the source of gamma rays and the energy of each gamma ray detected. Alternatively, this data may be digitized into either the intensity of the source of gamma rays or the energy of each gamma ray detected. The resulting digitized data constitutes the "original background fingerprint."
(2) Weapon Fingerprint Database. A weapon fingerprint database is created. The weapon fingerprint database is created by using radioactive or fissile material detection devices to gather data from the contents of a series of test containers. Each such test container contains a sample of a known, dangerous radioactive material such as U 238 or Pu 244. These contents may also include combinations of known, dangerous radioactive or fissile materials. In the preferred embodiment, this data from the contents of a series of test containers with known, dangerous radioactive material in them is then digitized into both the intensity of the source of gamma rays and the energy of each gamma ray detected. Alternatively, this data may be digitized into either the intensity of the source of gamma rays or the energy of each gamma ray detected. The resulting digitized data from each such test container constitutes an un-normalized weapon fingerprint (the "un-normalized weapon fingerprint"). Each of the un-normalized weapon fingerprints is then normalized by subtracting the original background fingerprint from it. The result is a database that contains the weapon fingerprint of each known, dangerous radioactive or fissile material. There may be other ways to create the weapon fingerprint database. The intensity of the source and the energy of each gamma ray emitted by a give radioactive or fissile material may be readily available from public sources such as the Nuclear Regulatory Commission.
(3) Manifest Fingerprint Database. A manifest fingerprint database is created. The manifest fingerprint database is created by using radioactive or fissile material detection devices to gather data from the contents of a series of test containers. The so-called "test" containers will necessarily be those that are actually in commerce though the data may be gathered under other circumstances. Each such test container contains known, legitimate contents such as those listed on the ship's manifest or other list of contents. The various types of legitimate contents are those permitted to be carried in a container by shipping authorities such as, for example, contents listed on the U.S. International Trade Commission's Harmonized Tariff Schedule.
   In an embodiment not forming part of the present invention, this data from the contents of test containers with known, legitimate contents in them is then digitized into both the intensity of the source of gamma rays and the energy of each gamma ray detected. Alternatively, this data may be digitized into either the intensity of the source of gamma rays or the energy of each gamma ray detected. The resulting digitized data from each test container constitutes an un-normalized manifest fingerprint (the "un-normalized manifest fingerprint"). Each of the un-normalized manifest fingerprints is then normalized by subtracting the original background fingerprint from it. The result is a database that contains the manifest fingerprint of each known, legitimate container content, such content being identified by the same standardized Commodity ID used to represent that content in the manifest database.
   It should be noted that the various types of legitimate contents sometimes will (1) not emit any gamma rays and the resulting digitized data will only be background radiation; and/or, (2) only attenuate (decrease the intensity/energy of gamma rays as they pass through matter) the background radiation and the resulting digitized data will be less than background radiation. The manifest fingerprint of each known, legitimate container content may thus be a negative value or simply measured by its difference from the original background fingerprint. It should also be noted that there is a formula for the attenuation of gamma rays in matter. The formula will permit anticipation of the manifest fingerprint where the following information is known: (1) the thickness and consistency of the of the container wall; (2) the thickness and consistency of the container contents; and, (3) the intensity and energy of the gamma radiation being attenuated. The thickness and consistency of a shipping container is standardized. The ship's manifest should contain information as to the thickness and consistency of the cargo content of the shipping container. And the intensity of the radiation being attenuated is known because the inspection day background fingerprint is used in the present invention as set forth immediately below.
(4) Inspection Day Background Fingerprint Database: An inspection day background fingerprint database is created. An inspection day background fingerprint is created by using radioactive or fissile material detection devices to gather data from an empty container on the day suspect containers will be inspected. In an embodiment not forming part of the invention, this data from an container gathered on the day suspect containers will be inspected is then digitized into both the intensity of the source of gamma rays and the energy of each gamma ray detected. Alternatively, this data may be digitized into either the intensity of the source of gamma rays or the energy of each gamma ray detected. Preferably, the inspection day background fingerprint should be recorded when the hoist attachment of the container crane is at its highest elevation from the top wharfage. In this way, a more accurate inspection day background fingerprint is achieved. The resulting digitized data constitutes the inspection day background fingerprint which is then stored in the inspection day background fingerprint database.

### BRIEF DESCRIPTION OF THE DRAWINGS

Fig. 1 is a side view of wharfage, a container crane assembly and a vessel;
Fig. 2 is perspective view of a container crane assembly;
Fig. 3 is a perspective view of a shipping container;
Fig. 4 is a perspective view of the shipping container engaged by a hoist attachment of the container crane;
Fig. 5 is a perspective view of the shipping container engaged by the hoist attachment of the container crane with three radiation or fissile material detection devices placed in three housings located between the spreader bars of the hoist attachment;
Fig. 6 is a diagram of the fissile or radioactive material detection devices, radiation shielding detection devices and microprocessors located in housing on the container crane, preferably on the hoist attachment, according to the principles of the present invention;
Fig. 7 is a diagram of the input, components and output of the present invention;
Fig. 8 is a flow chart which illustrates the creation of the original background fingerprint
Fig. 9 is a flow chart which illustrates the creation of the weapon fingerprint database
Fig. 10 is a flow chart which illustrates the creation of the manifest fingerprint database ;
Fig. 11 is a flow chart which illustrates the creation of the inspection day background fingerprint database ; and
Fig. 12 is a flow chart which illustrates one embodiment of the computer program, database structures and methods not forming part of the present invention.

### DESCRIPTION OF THE EXEMPLARY PREFERRED EMBODIMENT

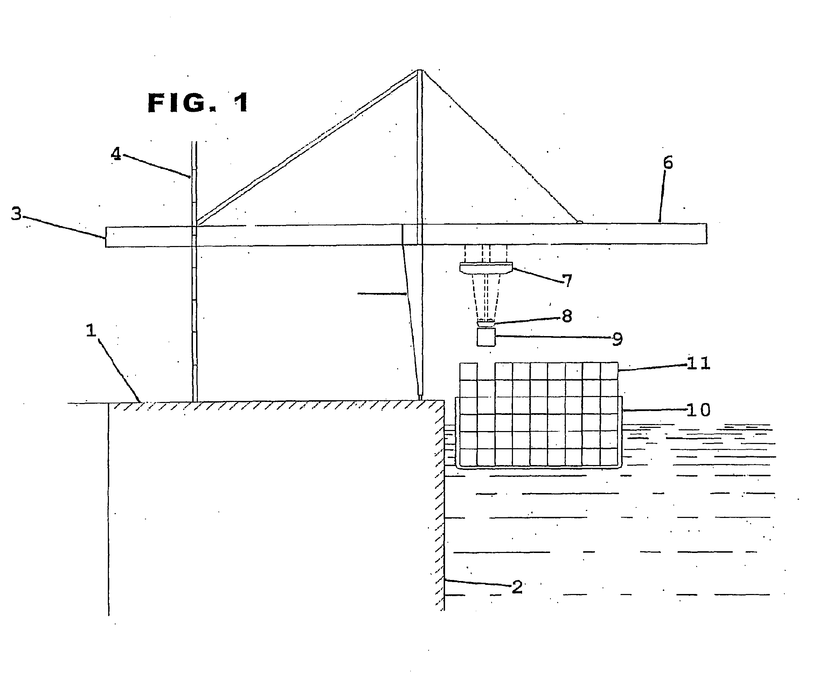

Referring now to Fig. 1, the typical operation of loading and/or unloading a containership 10 with a container crane 3 is described. In the typical operation of loading or unloading containers, the containership 10 is docked at the side wharfage 2. The container crane 3 sits on the top wharfage 1. The container crane 3 has four stanchions of which two stanchions 4 and 5 are shown in Fig. 1 (there are two other stanchions not shown in Fig. 1). A girder 6 carries the hoist mechanism 7, hoist attachment 8 and container 9 out over the containership 10 to be placed or taken from its place among the other containers 11 aboard the containership 10.

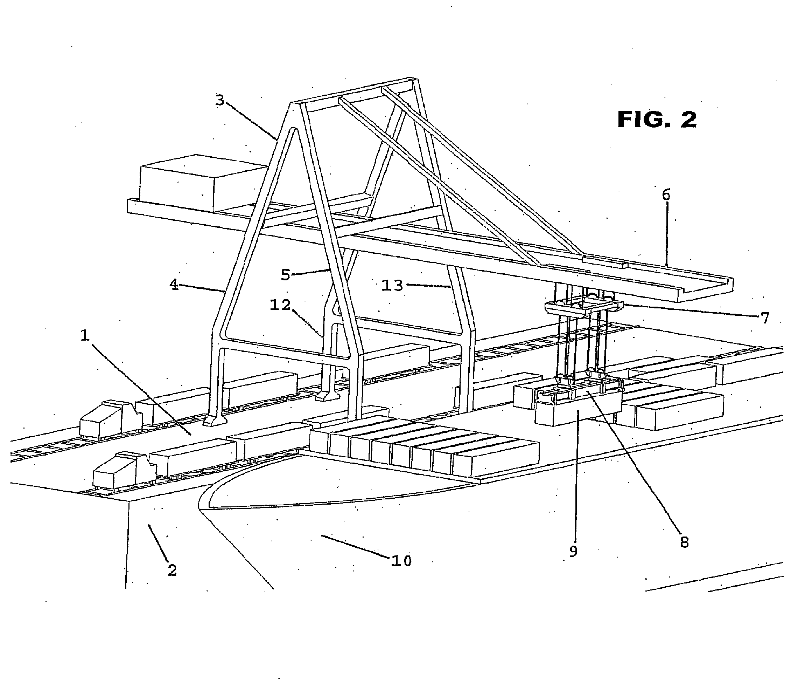

Fig. 2 shows a perspective view of the loading or unloading operation. From this perspective, stanchions 13 and 13 can be seen.

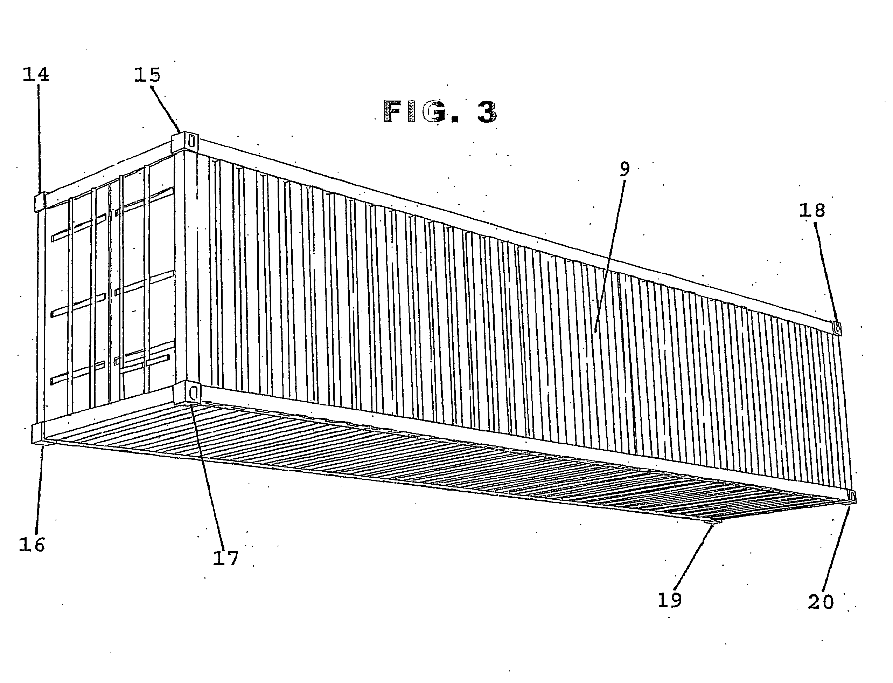

Fig. 3 shows a typical container 9 and seven of the eight female piece corner castings 14, 15, 16, 17, 18, 19 and 20.

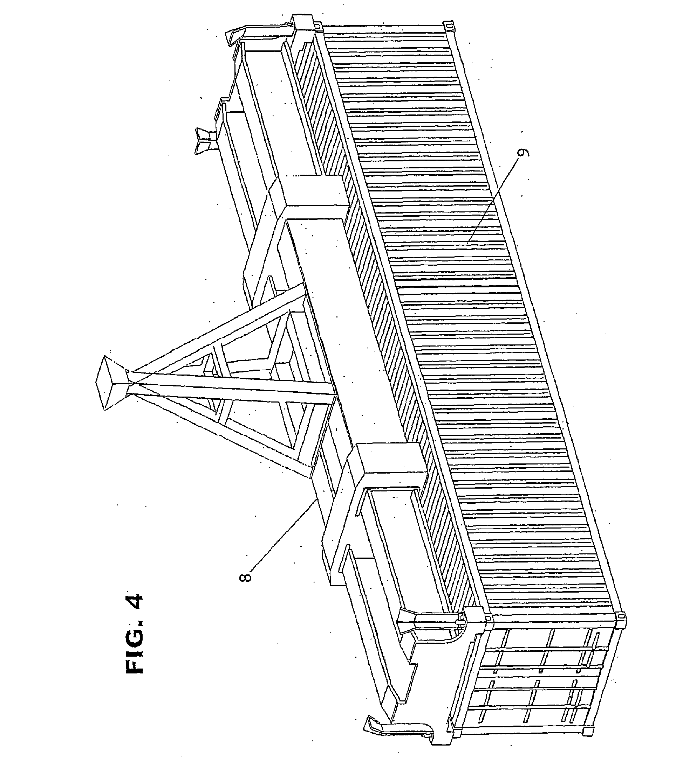

Fig. 4 shows a typical hoist attachment 8 when it is attached to the container 9.

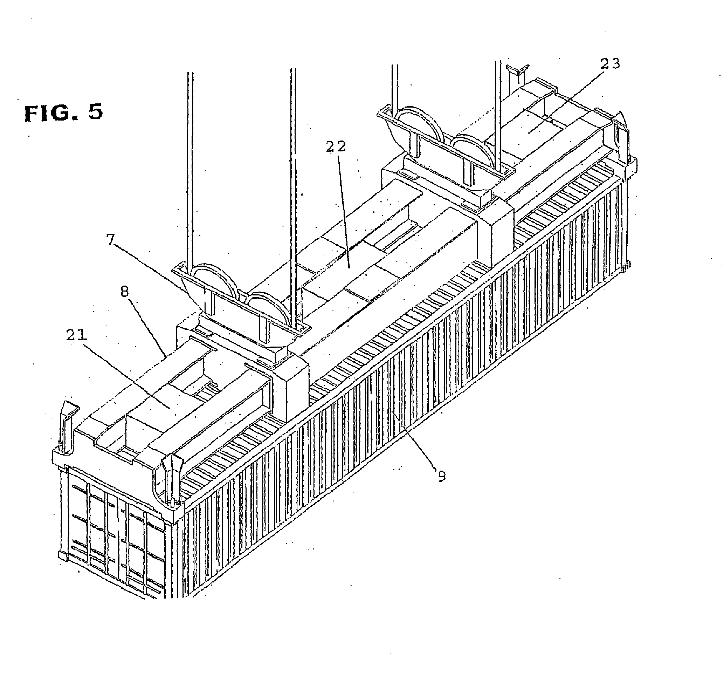

Fig. 5 is another perspective of the hoist mechanism 7 and hoist attachment 8 when the hoist attachment is attached to the container 9. From this perspective, the housings 21, 22 and 23 for the fissile or radioactive material detection devices, radiation shielding detection devices and microprocessor or PC 26 can be seen.

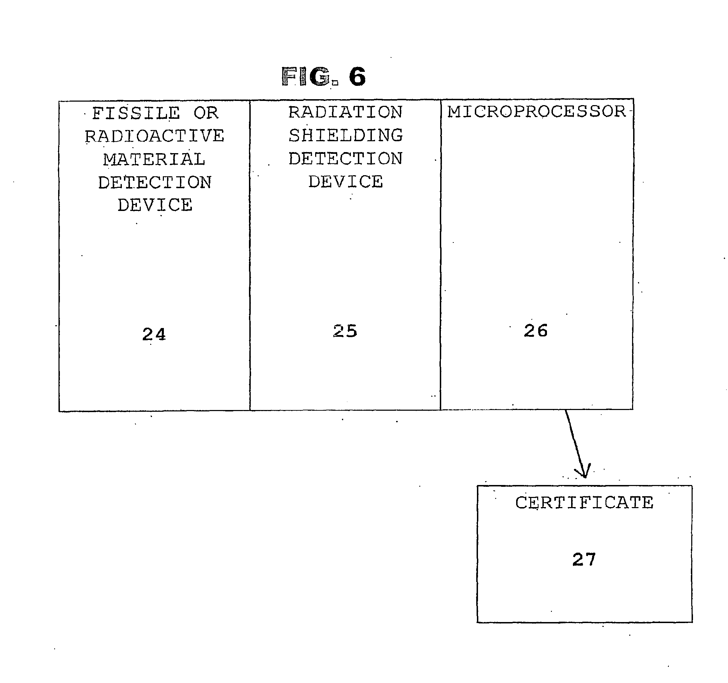

Fig. 6 is a diagram of one of the housings 21, 22 or 23 located on the hoist attachment 8 showing the fissile or radioactive material detection device 24, radiation shielding detection device 25 and microprocessor or PC 26. The fissile or radioactive material detection device 24, radiation shielding detection device 25 and microprocessor or PC 26 may be housed in one or more housings located on the container crane 3, preferably on the hoist attachment 8.

The best mode of carrying out the invention is to locate the fissile or radioactive material detection device 24, radiation shielding detection device 25 and microprocessor or PC 26 in housing 21, 22 and 23 on the hoist attachment 8 of the container crane 3. The fissile or radioactive material detection device 24 and radiation shielding detection device 25 can be off-the-shelf devices such as the systems sold by Canberra Industries, Inc. of Meriden, CT (www.canberra.com). The devices may further be suitably cushioned by hydraulic or electromagnetic shock-absorbers or actuators. As well, the fissile or radioactive material detection device 24 and radiation shielding detection device 25 located in the housing 21, 22 and 23 on the hoist attachment 8 of the container crane 3 can be custom made for use on a container crane.

With both the fissile or radioactive material detection device 24 and radiation shielding detection device 25 located in the housing 21, 22 and 23 on the hoist attachment 8 of the container crane 3, a microprocessor or PC 26 may be employed. The microprocessor or PC 26 may be located in housing 21, 22 and 23 on the hoist attachment 8 of the container crane 3 or elsewhere. For example, the microprocessor or PC 26 may be located in the operations office of the container yard as long as it is in communication with the fissile or radioactive material detection device 24 and radiation shielding detection device 25. The microprocessor or PC 26 may further be deployed in conjunction with the fissile or radioactive material detection device 24 and radiation shielding detection device 25. Either wired or wireless communications technology can be used to communicate the results or output of the fissile or radioactive material detection device 24 and radiation shielding detection device 25 to the microprocessor or PC 26. The microprocessor or PC 26 may also be in communication with the shipping company's logistics computer system such that the alphanumeric identification number and manifest information of the container 9 is also communicated to the microprocessor or PC 26. The manifest information may then be used by the microprocessor or PC 26 to determine threshold levels of fissile or radioactive material or radiation shielding material expected to be emitted from the container 9.

The microprocessor or PC 26 is preferably programmed with a computer program that has tolerances or thresholds against which radiation and radiation shielding material inspection results can be compared. For example, radiation guidelines as set by the Nuclear Regulatory Commission (the "NRC") and other state and federal regulatory agencies establish maximum acceptable radiation levels for human safety. The NRC maximum level can be used as a radiation tolerance. The extent of radiation shielding material necessary to cover up the presence of a nuclear weapon can be used as a radiation shielding material tolerance.

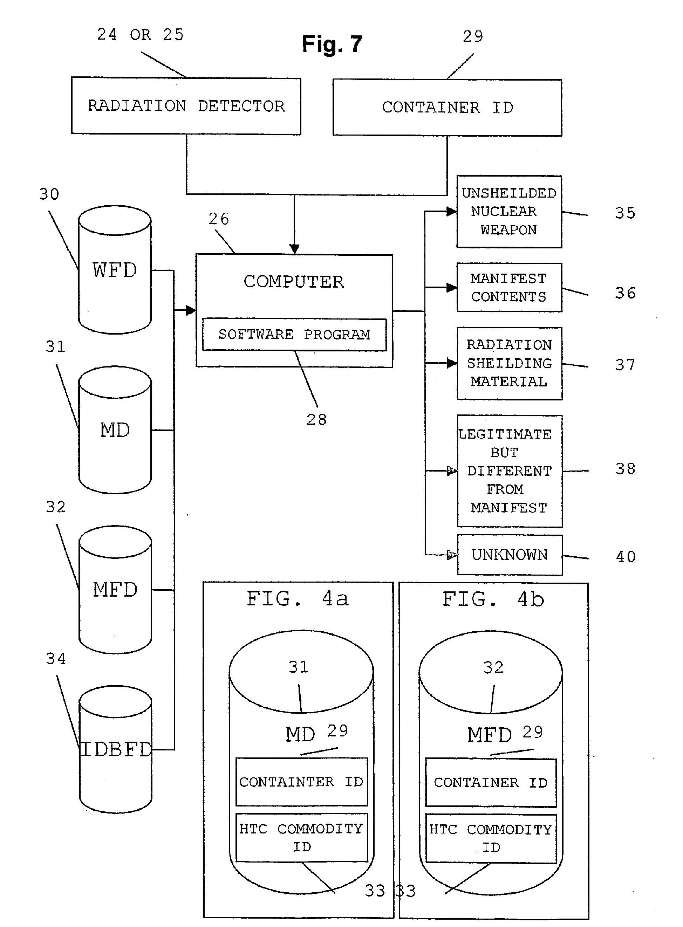

The microprocessor or PC 26 may also be run with a computer program 28 (Fig. 7), as described below, that has manifest information against which radiation and radiation shielding material inspection results can be compared. For example, the tolerance or threshold level of radiation may be dependent upon the contents of container 9. If known permissible radioactive materials are present in the container 9, the threshold may be set higher than for container loads for which the manifest does not list any known radioactive material. Furthermore, a plurality of detectors 24, 25 may be used to indicate that a spot source of radiation is present in the container 9 by comparing their respective outputs or obtaining differential output signals. Should the manifest indicate that the cargo load contains permissible radioactive material, but should be evenly distributed in the container 9, any differential output of the multiple detectors 24, 25 would indicate that a point source is present. Accordingly, a differential threshold may be established from the contents of the manifest.

In an example of the operation of the present invention, the level of radiation detected by the fissile or radioactive material detection devices 24 and 25 in housing 21, 22 and 23 on the hoist attachment 8 of the container crane 3 is communicated to the microprocessor or PC 26. The microprocessor or PC 26 then compares the radiation levels with the preset radiation tolerance or radiation levels expected to be experienced with the cargo in the container 9 as set forth on the manifest. If the radiation level is at or below the maximum tolerance or expected radiation levels, the computer program running on the microprocessor or PC 26 then compares the radiation shielding material level with the preset radiation shielding material tolerance or radiation shielding material levels expected to be experienced with the cargo in the container 9 as set forth on the manifest. If the radiation shielding material level is at or below the tolerance or expected radiation levels, the microprocessor or PC 26 can cause a certificate 27 to be printed which certificate 27 verifies that this particular container 9 (using its alphanumeric identification number) neither contains a nuclear weapon nor sufficient radiation shielding material to cover up a nuclear weapon. On the other hand, if either the radiation or radiation shielding material level exceeds tolerance or expected levels, this particular container 9 can be identified for a more invasive search, including physical inspection using the appropriate nuclear protocols, if necessary.

In the ordinary course of business, shipping companies and their agents will advise container shippers or consignors of the maximum radiation and radiation shielding material levels permitted to be in a container or expected from a given, manifested cargo. Vice versa, in the ordinary course of business, shippers or consignors will advise shipping companies of the levels of radiation and radiation shielding material to be expected in their containers. Legitimate shippers or consignors will advise the shipping company or agent that their particular container shipment will exceed these levels and need pre-loading inspection.

Fig. 7 is a diagram of the components used in the computer program, database structures and methods of an embodiment not forming part of the present invention. There are six sources of data: (1) the radiation detection device 24 or radiation shielding detection device 25; (2) the Container ID 29; (3) the weapon fingerprint database 30; (4) the manifest database 31; (5) the manifest fingerprint database 32 which contains both the Container ID 29 and the standardized Commodity ID 33; and, (6) the inspection day background fingerprint database 34. It should be understood that the inspection day background fingerprint database 34 may contain one or more inspection day background fingerprints. These six sources of data are accessed by the computer 26 running the computer program 28. The computer program 28 has access to the six sources of data. The output of the computer 26 is the return of statuses: (1) "likely contains an unshielded nuclear weapon" 35; (2) "likely has the contents said to be in it by the manifest" 36; (3) "likely contains radiation shielding material that could possibly shield a nuclear weapon" 37; (4) "likely contains legitimate contents that are different than those listed on the manifest" 38; and, (5) "contents unknown" 39.

Fig. 7a is detail of the manifest database 31 which contains both the Container ID 29 9 and the standardized Commodity ID 33. Fig. 7b is detail of the manifest fingerprint database which contains both the Container ID 29 and the standardized Commodity ID 33.

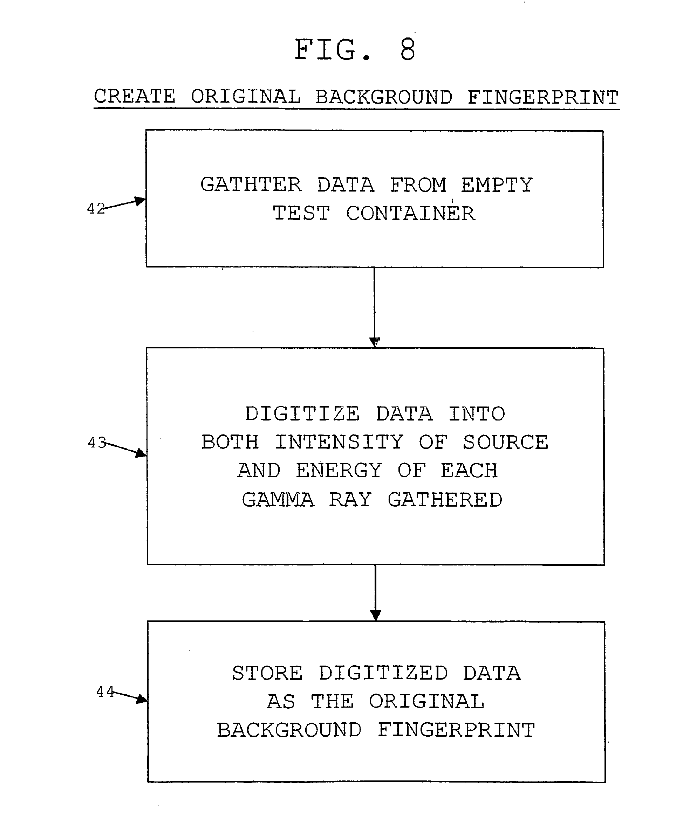

Fig. 8 is a flow chart which illustrates the creation of the original background fingerprint of the computer program, database structures and methods of an embodiment not forming part of the present invention. At step 42, the radiation detection device 24 or radiation shielding detection device 25 takes the fingerprint of an empty test container. At step 43, the data from the radiation detection device 24 or radiation shielding detection device 25 is then digitized into both the intensity of the source of gamma rays and the energy of each gamma ray detected. Alternatively, this data may be digitized into either the intensity of the source of gamma rays or the energy of each gamma ray detected. At step 44, this digitized data is then stored as the original background fingerprint.

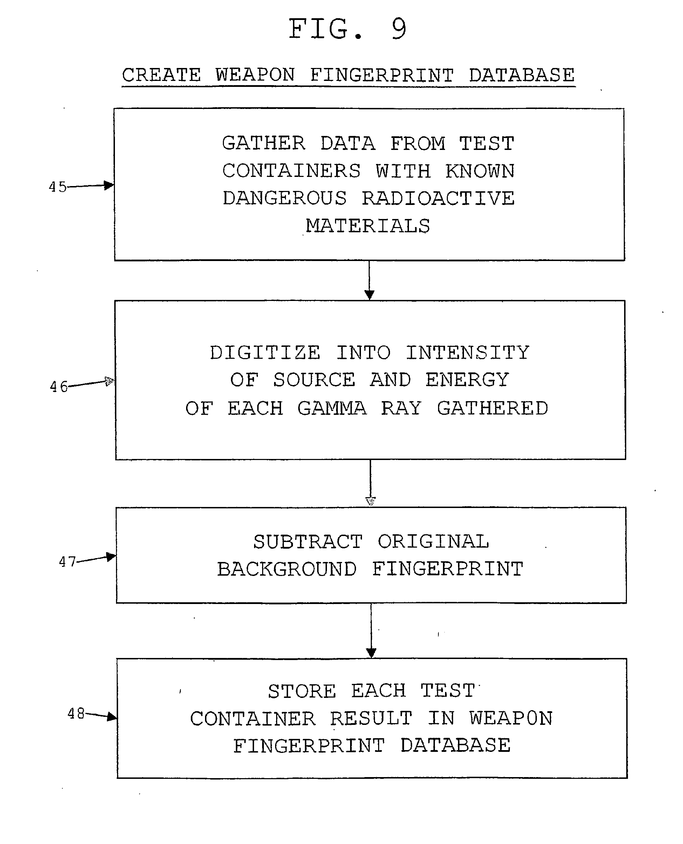

Fig. 9 is a flow chart which illustrates the creation of the weapon fingerprint database 30 of the computer program, database structures and methods of an embodiment not forming part of the present invention. At step 45, the radiation detection device 24 or radiation shielding detection device 25 takes the fingerprint of series of test containers with known, dangerous radioactive materials in them. At step 46, the data from the radiation detection device 24 or radiation shielding detection device 25 for each such known, dangerous radioactive material is then digitized into both the intensity of the source of gamma rays and the energy of each gamma ray detected. Alternatively, this data may be digitized into either the intensity of the source of gamma rays or the energy of each gamma ray detected. At step 47, the original background fingerprint (Fig. 8) is subtracted from this digitized data. At step 48, the resulting data for each such test container with known, dangerous radioactive material in it is stored in the weapon fingerprint database 30.

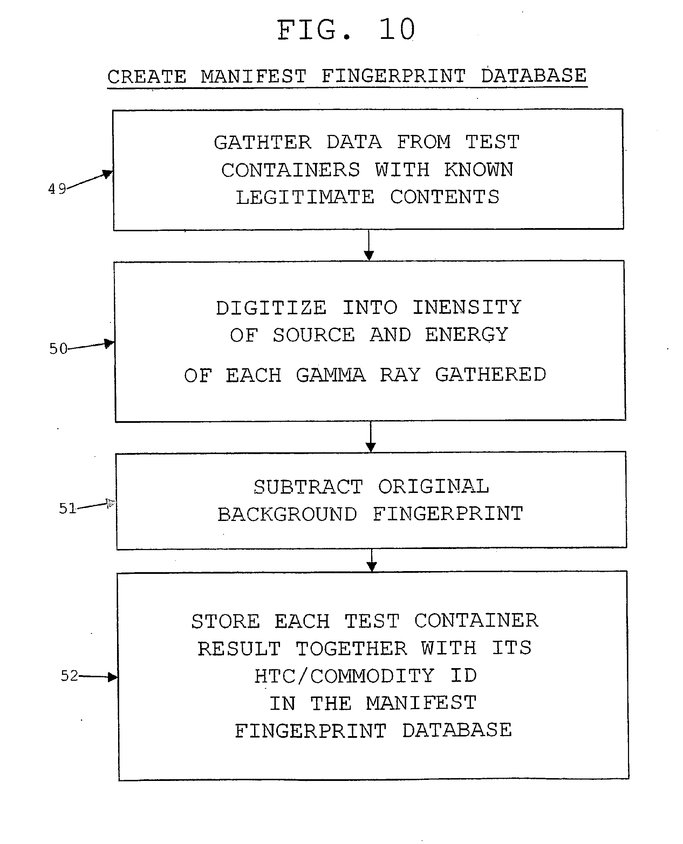

Fig. 10 is a flow chart which illustrates the creation of the manifest fingerprint database. 32 of the computer program, database structures and methods of an embodiment not forming part of the present invention. At step 49, the radiation detection device 24 or radiation shielding detection device 25 takes the fingerprint of test containers with known, legitimate contents in them. At step 50, the data from the radiation detection device 24 or radiation shielding detection device 25 for each such known, legitimate content is then digitized into both the intensity of the source of gamma rays and the energy of each gamma ray detected. Alternatively, this data may be digitized into either the intensity of the source of gamma rays or the energy of each gamma ray detected. At step 51, the original background fingerprint (Fig. 8) is subtracted from this digitized data. At step 52, the resulting data for each such test container with known, legitimate content in it and its associated standardized Commodity ID 33 are stored in the manifest fingerprint database 32.

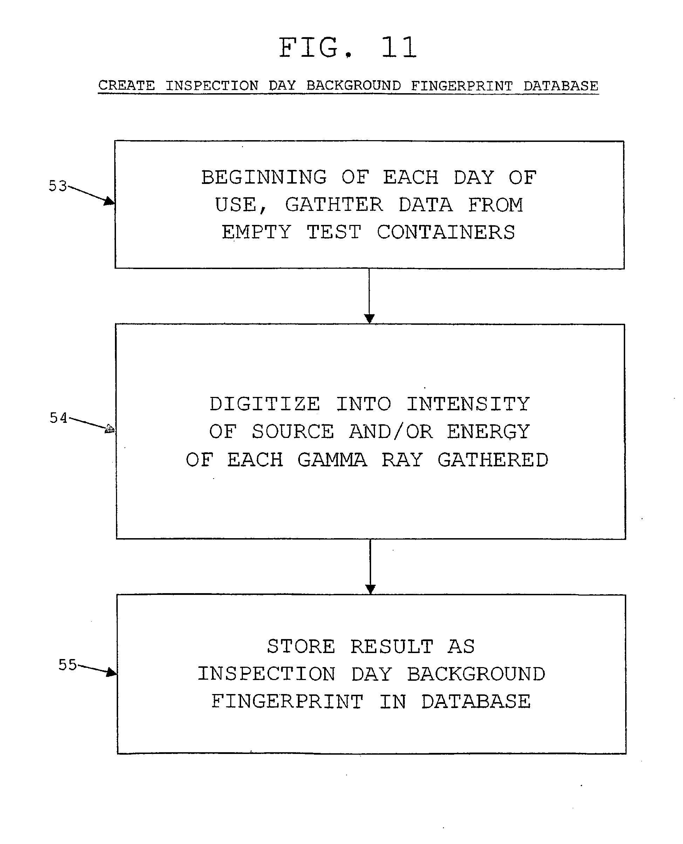

Fig. 11 is a flow chart which illustrates the creation of the inspection day background fingerprint database 34 of the computer program, database structures and methods of an embodiment not forming part of the present invention. At step 53, at the beginning of each day of use, the radiation detection device 24 or radiation shielding detection device 25 takes the fingerprint of an empty test container. At step 54, the data from the radiation detection device 24 or radiation shielding detection device 25 is then digitized into both the intensity of the source of gamma rays and the energy of each gamma ray detected. Alternatively, this data may be digitized into either the intensity of the source of gamma rays or the energy of each gamma ray detected. At step 55, this digitized data is then stored in the inspection day background fingerprint database 34.

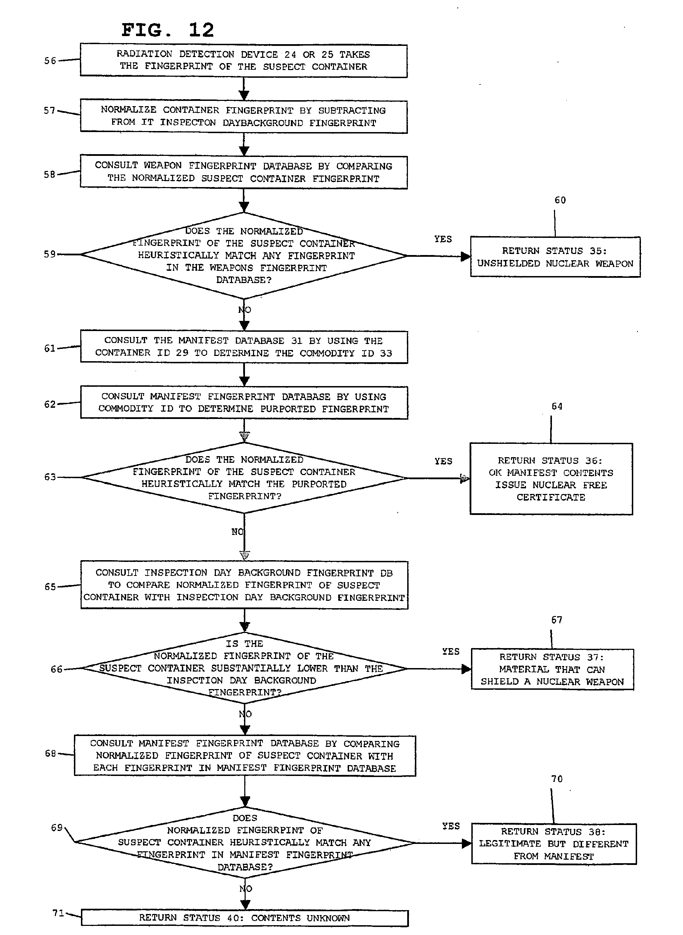

Fig. 12 is a flow chart which illustrates the operation of the computer program, database structures and methods of an embodiment, not forming part of the present invention. At step 56, the radiation detection device 24 or radiation shielding detection device 25 takes the fingerprint of the suspect container 9. At step 57, the suspect container's fingerprint is normalized by subtracting the inspection day background fingerprint from it. At step 58, the weapon fingerprint database 30 is consulted to compare the suspect container's normalized fingerprint with the fingerprints in the weapon fingerprint database 30. At step 59, it is determined whether the suspect container's normalized fingerprint heuristically matches any of the fingerprints in the weapon fingerprint database 30. If "Yes," then the suspect container likely contains an unshielded nuclear weapon and at step 60, status 35 to that effect is returned.

If "No," then at step 61, the manifest database 31 is consulted to look up the Container ID 29 and extract the standardized Commodity ID 33 for the contents said to be in the suspect container 9. At step 62, the manifest fingerprint database 32 is consulted to locate the fingerprint associated with this standardized Commodity ID 33. At step 63, it is determined whether the suspect container's normalized fingerprint heuristically matches the fingerprint from the manifest fingerprint database 32 associated with this standardized Commodity ID 33 (the "purported fingerprint"). If "Yes," then the suspect container likely contains the contents said to be in it by the manifest and at step 64, status 36 to that effect is returned.

If "No," then at step 65, the inspection day background fingerprint database 34 is consulted to compare the suspect container's normalized fingerprint with the inspection day background fingerprint. At step 66, it is determined whether the suspect container's normalized fingerprint is substantially lower than the inspection day background fingerprint. If "Yes," then the suspect container likely contains radiation shielding material that could possibly shield a nuclear weapon and at step 67, status 37 to that effect is returned.

It should be understood that at this point in the operation, there has been a determination whether the suspect container contains (1) a nuclear weapon; or, (2) contents as listed on the manifest; or, (3) radiation shielding material. If none of these potential contents have been determined to be in the container, then the process can stop.

To continue the interrogation of the contents, if the suspect container's normalized fingerprint is not substantially lower than the inspection day background fingerprint, then at step 68, the manifest fingerprint database 32 is consulted to compare the suspect container's normalized fingerprint with each fingerprint in the manifest fingerprint database 32. At step 69, it is determined whether the suspect container's normalized fingerprint heuristically matches any fingerprint in the manifest fingerprint database 32. If "Yes," then the suspect container likely contains legitimate contents that are different than those listed on the manifest and at step 70, status 38 to that effect is returned. If "No," then the contents of the suspect container are unknown and at step 71, status 39 to that effect is returned.

The order in which each step is performed many be varied to suit the particular purposes or needs of the operator.

In the ordinary course of business, shipping companies and their agents will advise container shippers of the maximum radiation and radiation shielding material levels permitted to be in a container beyond which it will be automatically be inspected before loading. Vice versa, in the ordinary course of business, legitimate shippers will advise the shipping company or agent that their particular container shipment will exceed these levels and need pre-loading inspection.

There has been described hereinabove a novel system and method for detecting radiation within shipping containers. Those skilled in the art may now make numerous uses of, and departures from, the hereinabove described embodiments without departing from the inventive principles disclosed herein. Accordingly, the present invention is to be defined solely by the lawfully permissible scope of the appended Claims.

### DEFINITION OF CERTAIN WORDS, TERMS OR PHRASES USED

"Container." As used in this written description, "container" means any kind of a receptacle, such as a box, carton, can, or jar, in which material is held or carried. A "shipping container" is a container that has been standardized for efficient land and ocean-going shipping and handling. In FIG. 1 and 2, a "shipping container" 2 is shown. "Container" includes, but is not limited to, truck trailers, railcars, airfreight containers, luggage and the like.

"Legitimate content." As used in this written description, "legitimate content" means the contents of a container that may lawfully be transported.

"To digitize." As used in this written description, "to digitize" means to transform analog data into digital form.

"Digitized gamma ray data." As used in this written description, digitized gamma ray data means any measurement or record of gamma rays emitted by matter which has been digitized.

"Energy of each gamma ray." As used in this written description, "energy of each gamma ray" means the energy of the deposit of radiation as the gamma ray stops or is absorbed by matter, in general, and by matter that detects gamma radiation, in particular. For example, as gamma rays pass through a sodium iodide (NaI) detector, their energy is absorbed by the NaI. This energy is "re-radiated" in the visual spectrum which a photomultiplier detects and turns into an electrical signal. For a solid state detector like Cadmium Telluride (CdTe), the gamma ray energy is absorbed by CdTe and then released directly as an electric signal. The electrical signal strength is directly proportional to the energy of the gamma ray.

"To heuristically match." As used in this written description, "to heuristically match" means to compare patterns of digitized data, determine their similarity with a high degree of certainty while not requiring an exact match. A "heuristic match" is the result of heuristically matching. "Intensity of the source of the gamma ray." As used in this written description, "intensity of the source of the gamma ray(s)" means the number of gamma ray photons emitted by a particular radioactive material per units of time.

"Spectrogram." As used in this written description, "spectrogram" means a graphic or photographic representation of a spectrum. As used in this written description, "spectrograph" and "spectrogram" are synonymous.

"Spectrographically analyze." As used in this written description, "spectrographically analyze" means to analyze data represented as a spectrogram.

"Substantially lower than the inspection day background fingerprint." As used in this written description, "substantially lower than the inspection day background fingerprint" means lower to the extent that one could reasonably conclude that the detection device is gathering shielded background radiation data.

## Claims

1. A system comprising a computer (26) and a fissile or radioactive material detection device (24), the system being adapted to detect the presence of fissile or radioactive material in a shipping container (9);
**characterised in that** the system further comprises:
a container crane assembly (3) operable to lift said container (9);
wherein the fissile or radioactive material detection device (24) is located on said container crane assembly (3) and is operable to detect the presence of said fissile or radioactive material when proximal to said container (9) during the handling thereof by the container crane assembly (3); and
wherein said fissile or radioactive material detection device (24) is adapted to develop an output signal which is communicated to said computer (26), said computer (26) in response to said output signal being adapted to compare said output signal to a predetermined threshold, which comparison enables a status of said container (9) to be determined.

2. The system of Claim 1 wherein said container crane assembly (3) includes a hoist attachment (8) to engage said container (9), said fissile or radioactive material detection device (24) being mounted on said hoist attachment (8).

3. The system of Claim 1 wherein said computer(26) generates a certificate verifying that said container(9) does not contain a quantity of said material greater than a predetermined maximum quantity in the event said output signal is less than said threshold.

4. The system of Claim 1 wherein said computer (26) develops an output signal indicative of said material being present in said container (9) in the event said output signal exceeds said threshold.

5. A method for detection of the presence of fissile or radioactive material within a shipping container (9) **characterised in that** the method comprises the steps of: placing a fissile or radioactive material detection device (24) on a container crane assembly (3) operable to lift said container; positioning the fissile or radioactive material detection device (24) in a fixed spatial relationship proximate to said
shipping container (9) during the handling thereof by the container crane assembly (3); and comparing an output signal of said fissile or radioactive material detection device (24) to a predetermined threshold to determine a status of said container (9).

6. A method as set forth in claim 5 further comprising the step of developing an alarm signal in the event said output signal exceeds said threshold.

7. A method as set forth in Claim 5 further comprising the step of issuing a certificate verifying that said container (9) does not contain a quantity of said material greater than a predetermined maximum quantity in the event said output signal is less than said threshold.

8. A method as set forth in Claim 5 wherein said positioning step includes the step of mounting said fissile or radioactive material detection device (24) to a hoist attachment (8) of said container crane assembly (3).

9. A method as set forth in Claim 5 further comprising the step of calculating said threshold based on information contained in a manifest listing the cargo expected to be in said container (9).

## Patentansprüche

1. System mit einem Computer (26) und einer Detektionsvorrichtung (24) für spaltbares oder radioaktives Material, wobei das System zum Detektieren von spaltbarem oder radioaktivem Material in Versandcontainern (9) geeignet ist,
**dadurch gekennzeichnet, dass** das System weiterhin aufweist:
einen zum Anheben der Container (9) einsetzbaren Containerkranaufbau (3);
wobei die Detektionsvorrichtung (24) für spaltbares oder radioaktives Material an dem Containerkranaufbau (3) angeordnet ist und zum Detektieren des spaltbaren oder radioaktiven Materials einsetzbar ist, wenn sie während des Handlings durch den Containerkranaufbau (3) dem Container (9) nahe ist; und
wobei die Detektionsvorrichtung (24) für spaltbares oder radioaktives Material geeignet ist, um ein Ausgangssignal zu generieren, das dem Computer (26) übermittelt wird, wobei der Computer (26) als Reaktion auf das Ausgangssignals geeignet ist, das Ausgangssignal mit einem vorgegebenen Grenzwert zu vergleichen, wobei es der Vergleich ermöglicht, einen Status des Container (9) zu bestimmen.

2. System nach Anspruch 1, wobei der Containerkranaufbau (3) eine Hebezeug (8) zum Anlegen an den Container (9) umfasst und die Detektionsvorrichtung (24) für spaltbares oder radioaktives Material an dem Hebezeug (8) montiert ist.

3. System nach Anspruch 1, wobei der Computer (26) für den Fall, dass das Ausgangssignal unterhalb des Grenzwertes liegt, ein Zertifikat erstellt, welches verifiziert, dass der Container (9) keine Menge des Materials enthält, die größer als eine vorgegebene maximale Menge ist.

4. System nach Anspruch 1, wobei der Computer (26) für den Fall, dass das Ausgangssignal den Grenzwert überschreitet, ein Ausgangssignal generiert, das das Material bezeichnet, welches sich im Container (9) befindet.

5. Verfahren zum Detektieren der Anwesenheit von spaltbarem oder radioaktivem Material in einem Versandcontainer (9), **dadurch gekennzeichnet, dass** das Verfahren die folgenden Schritte aufweist:
a) Anordnen einer Detektionsvorrichtung (24) für spaltbares oder radioaktives Material an einen zum Anheben der Container (9) einsetzbaren Containerkranaufbau (3)
b) Positionieren der Detektionsvorrichtung (24) für spaltbares oder radioaktives Material in einem festen räumlichen Beziehung nahe des Versandcontainers während des Handlings desselben durch den Containerkranaufbau (3); und
c) Vergleichen des Ausgangssignals der Detektionsvorrichtung (24) für spaltbares oder radioaktives Material mit einem vorgegebenen Grenzwert zum Ermitteln eines Status des Containers (9).

6. Verfahren nach Anspruch 5, das weiterhin, für den Fall, dass das Ausgangssignal den Grenzwert überschreitet, den Schritt des Generierens eines Alarmsignals aufweist.

7. Verfahren nach Anspruch 5, das weiterhin, für den Fall, dass das Ausgangssignal unterhalb des Grenzwertes liegt, den Schritt des Ausstellens eines Zertifikats aufweist, welches verifiziert, dass der Container (9) keine Menge des Materials enthält, die größer als eine vorgegebene maximale Menge ist.

8. Verfahren nach Anspruch 5, wobei der Positionierschritt den Schritt des Montierens der Detektionsvorrichtung (24) für spaltbares oder radioaktives Material an ein Hebezeug (8) des Containerkranaufbaus (3) umfasst.

9. Verfahren nach Anspruch 5, das weiterhin den Schritt des Berechnens des Grenzwertes basierend auf Informationen aufweist, die in einem Verzeichnis enthalten sind, das die Ladung auflistet, von welcher erwartet wird, dass sie sich in dem Container (9) befindet.

## Revendications

1. Système comprenant un ordinateur (26) et un dispositif de détection de matériau fissile ou radioactif (24), le système étant adapté pour détecter la présence de matériau fissile ou radioactif dans un conteneur d'expédition (9) ;
**caractérisé en ce que** le système comprend par ailleurs :
un ensemble grue à conteneurs (3) pouvant être utilisé pour soulever ledit conteneur (9) ;
dans lequel le dispositif de détection de matériau fissile ou radioactif (24) est placé sur ledit ensemble grue à conteneurs (3) et peut être utilisé pour détecter la présence dudit matériau fissile ou radioactif quand il est situé proximal au dit conteneur (9) durant la manipulation de ce dernier par l'ensemble grue à conteneurs (3) ; et
dans lequel ledit dispositif de détection de matériau fissile ou radioactif (24) est adapté pour générer un signal de sortie qui est communiqué au dit ordinateur (26), ledit ordinateur (26), en réponse au dit signal de sortie, étant adapté pour comparer ledit signal de sortie à un seuil prédéterminé, ladite comparaison permettant de déterminer un statut dudit conteneur (9).

2. Système selon la revendication 1 dans lequel ledit ensemble grue à conteneurs (3) comprend une attache de palan (8) pour mettre en prise ledit conteneur (9), ledit dispositif de détection de matériau fissile ou radioactif (24) étant monté sur ladite attache de palan (8).

3. Système selon la revendication 1 dans lequel ledit ordinateur (26) émet un certificat qui vérifie que ledit conteneur (9) ne contient pas une quantité dudit matériau plus élevée qu'une quantité maximale prédéterminée dans le cas où ledit signal de sortie est inférieur au dit seuil.

4. Système selon la revendication 1 dans lequel ledit ordinateur (26) génère un signal de sortie indiquant ledit matériau qui est présent dans ledit conteneur (9) dans le cas où ledit signal de sortie dépasse ledit seuil.

5. Procédé pour la détection de la présence de matériau fissile ou radioactif à l'intérieur d'un conteneur d'expédition (9) **caractérisé en ce que** le procédé comprend les étapes consistant : à placer un dispositif de détection de matériau fissile ou radioactif (24) sur un ensemble grue à conteneurs (3) pouvant être utilisé pour soulever ledit conteneur ; à positionner le dispositif de détection de matériau fissile ou radioactif (24) dans une relation spatiale fixe par rapport au dit conteneur d'expédition (9) durant la manipulation de ce dernier par l'ensemble grue à conteneurs (3) ; et à comparer un signal de sortie dudit dispositif de détection de matériau fissile ou radioactif (24) à un seuil prédéterminé dans le but de déterminer un statut dudit conteneur (9).

6. Procédé selon la revendication 5 comprenant par ailleurs l'étape consistant à générer un signal d'alarme dans le cas où ledit signal de sortie dépasse ledit seuil.

7. Procédé selon la revendication 5 comprenant par ailleurs l'étape consistant à émettre un certificat qui vérifie que ledit conteneur (9) ne contient pas une quantité dudit matériau plus élevée qu'une quantité maximale prédéterminée dans le cas où ledit signal de sortie est inférieur au dit seuil.

8. Procédé selon la revendication 5 dans lequel ladite étape de positionnement comprend l'étape consistant à monter ledit dispositif de détection de matériau fissile ou radioactif (24) sur une attache de palan (8) dudit ensemble grue à conteneurs (3).

9. Procédé selon la revendication 5 comprenant par ailleurs l'étape consistant à calculer ledit seuil sur la base d'informations contenues dans un manifeste qui détaille la cargaison attendue pour se trouver dans ledit conteneur (9).
